# EUROPEAN PATENT APPLICATION

(11) **EP 2 873 830 A1**
(43) Date of publication of application: **20.05.2015**
(21) Application number: 14825080.6
(22) Date of filing: 21.08.2014
(51) Int. Cl.: F02B 39/00, B63H 21/14, F01D 9/02, F01D 17/00, F02B 37/22

(54) **TURBOCHARGER, TURBINE NOZZLE, AND SHIP**

(30) Priority: 11.09.2013 JP 2013188215
(71) Applicant: Mitsubishi Heavy Industries, Tokyo 108-8215 (JP)
(72) Inventor: SHIRAISHI, Keiichi, Tokyo 108-8215 (JP)
(74) Representative: Hoffmann Eitle
(86) International application number: PCT/JP2014/071907
(87) International publication number: WO 2015/037410

(57) **Abstract**

An object of the present invention is to provide a turbocharger, a turbine nozzle, and a ship that can improve turbine efficiency, and can effectively change an inflow area of exhaust gas that flows into the turbine nozzle according to an engine load. In a turbine nozzle (25), a plurality of blade tip portions (44) are provided spaced apart from each other in a peripheral direction, the blade tip portions (44) being provided between an outer peripheral side member (25b) and a partition member (42), and a plurality of blade root portions (45) are provided spaced apart from each other in the peripheral direction, the blade root portions (45) being provided between an inner peripheral side member (25a) and the partition member (42). Additionally, a trailing edge (45b) of a downstream side in a flow direction of exhaust gas of the blade root portion (45) is formed so as to be located closer to an upstream side in the flow direction of the exhaust gas than a trailing edge (44b) of the blade tip portion (44). Consequently, a throat width (S1) between the blade root portions (45, 45) adjacent to each other in the peripheral direction of the turbine nozzle (25) is set to be larger than a throat width (S2) between the blade tip portions (44, 44) adjacent to each other in the peripheral direction.

## Description

### {Technical Field}

The present invention relates to a turbocharger, a turbine nozzle, and a ship that are, for example, used in combination with a large-sized internal combustion engine, such as a marine internal combustion engine and an internal combustion engine for power generation.

### {Background Art}

In recent years, low load operation of ships is actively performed, and higher performance is required at the time of low load in a marine internal combustion engine.

For this reason, as a turbocharger used in combination with a large-sized internal combustion engine, such as the marine internal combustion engine and an internal combustion engine for power generation, there has been known a turbocharger in which a space formed between an inner casing and an outer casing is configured so as to serve as a first exhaust gas passage for guiding exhaust gas discharged from the internal combustion engine to an outer peripheral side of a turbine nozzle, and in which a second exhaust gas passage for guiding the exhaust gas branched in the middle of the first exhaust gas passage to an inner peripheral side of the turbine nozzle is formed at an inner peripheral side of the inner casing (for example, refer to PTL 1).

As a result, an inflow area of the exhaust gas that flows into the turbine nozzle can be changed in two stages (only the first exhaust gas passage, or both the first and second exhaust gas passages) according to an engine load.

However, in the turbocharger as described above, when the exhaust gas is guided to the turbine nozzle only from the first exhaust gas passage, the exhaust gas flows to a downstream side of the turbine nozzle along a partition member (the inner casing) provided at the turbine nozzle in order to separate the first exhaust gas passage from the second exhaust gas passage. Therefore, there has been a problem that the exhaust gas derived from the turbine nozzle is not guided to an entire turbine rotor blade, and that turbine efficiency is reduced as compared with a turbocharger in which a partition member is not provided at a turbine nozzle.

Consequently, PTL 2 discloses a turbocharger having a configuration in which a partition member is provided at a middle position in a radial direction of a turbine nozzle of a turbocompressor to which exhaust gas discharged from an internal combustion engine is guided, and in which an outer peripheral side of the partition member inclines to an inner peripheral side of the turbine nozzle from an upstream side toward a downstream side of the exhaust gas guided to the turbine nozzle.

According to such turbocharger, the exhaust gas that flows through the turbine nozzle closer to an outside in the radial direction than the partition member is guided to the inner peripheral side of the turbine nozzle along an inclination of the outer peripheral side of the partition member. Consequently, the exhaust gas derived from the turbine nozzle can be guided to an entire turbine rotor blade. Accordingly, it is possible to improve turbine efficiency as compared with a case where the outer peripheral side of the partition member is not inclined.

### {Citation List}

### {Patent Literature}

{PTL 1}
   The Publication of Japanese Patent No. 5222274
{PTL 2}
   Japanese Unexamined Patent Application, Publication No. 2012-215129

### {Summary of Invention}

### {Technical Problem}

As described above, from a viewpoint of guiding the exhaust gas derived from the turbine nozzle to the entire turbine rotor blade, it is preferable that not only the outer peripheral side of the partition member is inclined, but that the partition member itself is provided at an inside in the radial direction if possible.

In addition, also from a viewpoint of obtaining higher performance at the time of low load, it is preferable to provide the partition member at the inside in the radial direction if possible.

However, when the partition member itself is moved to the inside in the radial direction, a width of the second exhaust gas passage closer to the inside in the radial direction than the partition member becomes narrow. In that case, when a nozzle blade portion closer to the inside than the partition member has a configuration in which a nozzle blade portion closer to an outside than the partition member has been merely extended, an area of the second exhaust gas passage becomes small. As a result of it, an amount of change of the inflow area of the exhaust gas that flows into the turbine nozzle becomes small in a case where the exhaust gas discharged from the internal combustion engine is made to flow only to the first exhaust gas passage, and in a case where it is made to flow to both the first and second exhaust gas passages. In that case, an effect by changing in two stages the inflow area of the exhaust gas that flows into the turbine nozzle according to the engine load becomes small.

The present invention has been made in view of such circumstances, and an object thereof is to provide a turbocharger, a turbine nozzle, and a ship that can improve engine performance in a state of having switched to an inflow area of the exhaust gas most suitable at the time of low load of an engine by improving turbine efficiency when an inflow area of the exhaust gas is decreased.

### {Solution to Problem}

A first aspect of the present invention is a turbocharger that compresses combustion air of an internal combustion engine, and sends it into a combustion chamber of the internal combustion engine, in which a turbine provided at the turbocharger is provided with: a turbine rotor blade rotationally driven by exhaust gas discharged from the internal combustion engine; a plurality of turbine nozzles that guide the exhaust gas to the turbine rotor blade; a first exhaust gas passage that guides exhaust gas to the turbine nozzles regardless of an output of the internal combustion engine; and a second exhaust gas passage that guides the exhaust gas to the turbine nozzles only when the output of the internal combustion engine is not less than a particular output, and in which the turbine nozzles are each provided with: a partition member that separates the exhaust gas guided from the first exhaust gas passage and the exhaust gas guided from the second exhaust gas passage; a first exhaust gas passage side blade portion through which the exhaust gas guided from the first exhaust gas passage passes; and a second exhaust gas passage side blade portion through which the exhaust gas guided from the second exhaust gas passage passes, and in which a throat width between the second exhaust gas passage side blade portions adjacent to each other in a peripheral direction is set to be larger than a throat width between the first exhaust gas passage side blade portions adjacent to each other in the peripheral direction.

A second aspect of the present invention is a turbocharger that compresses combustion air of an internal combustion engine, and sends it into a combustion chamber of the internal combustion engine, in which a turbine provided at the turbocharger is provided with: a turbine rotor blade rotationally driven by exhaust gas discharged from the internal combustion engine; and a turbine nozzle that guides the exhaust gas to the turbine rotor blade, and in which the turbine nozzle is provided with: a cylindrical inner peripheral side member; an outer peripheral side member that has an inner diameter larger than the inner peripheral side member, and is arranged concentrically at an outer peripheral side of the inner peripheral side member; a partition member provided between the inner peripheral side member and the outer peripheral side member; a plurality of blade tip portions provided spaced apart from each other in a peripheral direction, the portions being provided between the outer peripheral side member and the partition member; and a plurality of blade root portions provided spaced apart from each other in the peripheral direction, the portions being provided between the inner peripheral side member and the partition member, and in which a throat width between the blade root portions adjacent to each other in the peripheral direction is set to be larger than a throat width between the blade tip portions adjacent to each other in the peripheral direction.

Here, the throat widths mean interval dimensions of portions where intervals between the blade tip portions and between the blade root portions become the smallest in the exhaust gas passages formed between the blade tip portions adjacent to each other and between the blade root portions adjacent to each other.

When the blade tip portion and the blade root portion are made to have a same cross-sectional shape, and are continuously formed in a radial direction at the inner peripheral side and the outer peripheral side that have sandwiched the partition member, the intervals between the blade tip portions adjacent to each other in the peripheral direction of the turbine nozzle and between the blade root portions adjacent to each other therein become smaller toward an inside in the radial direction of the turbine nozzle. In that case, the throat widths of the exhaust gas passages formed between the blade tip portions adjacent to each other and between the blade root portions adjacent to each other also become smaller toward the inside in the radial direction.

In contrast with this, according to the turbocharger pertaining to the first and second aspects of the present invention, the throat width between the blade root portions adjacent to each other is set to be larger than the throat width between the blade tip portions, and thereby it becomes possible to increase a passage area of the exhaust gas that flows between the inner peripheral side member and the partition member. In that case, it can be suppressed that a flow rate of the exhaust gas that flows between the inner peripheral side member and the partition member decreases, even though the partition member is moved to and installed at the inside in the radial direction.

At the inner peripheral side and the outer peripheral side that have sandwiched the partition member, a blade profile of the blade tip portion and a blade profile of the blade root portion are continuously formed, and a trailing edge of the blade root portion is formed so as to be located closer to an upstream side in a flow direction of the exhaust gas than a trailing edge of the blade tip portion.

The blade tip portion and the blade root portion are made to have the same cross-sectional shape at first, and are continuously formed in the radial direction at the inner peripheral side and the outer peripheral side that have sandwiched the partition member, and subsequently, the trailing edge of the blade root portion is cut. In that case, the trailing edge of the blade root portion is located closer to the upstream side in the flow direction of the exhaust gas than the trailing edge of the blade tip portion. As a result, the throat width between the blade root portions becomes larger than the throat width between the blade tip portions.

A third aspect of the present invention is a turbocharger that compresses combustion air of an internal combustion engine, and sends it into a combustion chamber of the internal combustion engine, in which a turbine provided at the turbocharger is provided with: a turbine rotor blade rotationally driven by exhaust gas discharged from the internal combustion engine; and a turbine nozzle that guides the exhaust gas to the turbine rotor blade, and in which the turbine nozzle is provided with: a cylindrical inner peripheral side member; an outer peripheral side member that has an inner diameter larger than the inner peripheral side member, and is arranged concentrically at an outer peripheral side of the inner peripheral side member; a partition member provided between the inner peripheral side member and the outer peripheral side member; a plurality of blade tip portions provided spaced apart from each other in a peripheral direction, the portions being provided between the outer peripheral side member and the partition member; and a plurality of blade root portions provided spaced apart from each other in the peripheral direction, the portions being provided between the inner peripheral side member and the partition member, and in which at an inner peripheral side and an outer peripheral side that have sandwiched the partition member, a blade profile of the blade tip portion and a blade profile of the blade root portion are continuously formed, and a trailing edge of the blade root portion is formed so as to be located closer to an upstream side in a flow direction of the exhaust gas than a trailing edge of the blade tip portion.

In such turbocharger, the trailing edge of the blade root portion may just be formed so as to be located closer to the upstream side in the flow direction of the exhaust gas than the trailing edge of the blade tip portion, and a throat width between the blade root portions may not be set to be larger than a throat width between the blade tip portions. Even if the throat width between the blade root portions is smaller than the throat width between the blade tip portions, a sufficient operational effect can be obtained by the above-described configuration as compared with a case where the blade tip portion and the blade root portion are made to have a same cross-sectional shape, and are continuously formed in a radial direction at the inner peripheral side and the outer peripheral side that have sandwiched the partition member.

In addition, the turbocharger may be configured such that the number of blade root portions is formed less than the number of blade tip portions along the peripheral direction.

Also by the above, the throat width between the blade root portions becomes larger than the throat width between the blade tip portions.

A fourth aspect of the present invention can be a turbine nozzle that is arranged at an upstream side of a turbine rotor blade of a turbocharger that compresses combustion air of an internal combustion engine and sends it into a combustion chamber of the internal combustion engine, and guides the exhaust gas to the turbine rotor blade. The turbine nozzle is provided with: a cylindrical inner peripheral side member; an outer peripheral side member that has an inner diameter larger than the inner peripheral side member, and is arranged concentrically at an outer peripheral side of the inner peripheral side member; a partition member provided between the inner peripheral side member and the outer peripheral side member; a plurality of blade tip portions provided spaced apart from each other in a peripheral direction, the portions being provided between the outer peripheral side member and the partition member; and a plurality of blade root portions provided spaced apart from each other in the peripheral direction, the portions being provided between the inner peripheral side member and the partition member, in which a throat width between the blade root portions adjacent to each other in the peripheral direction is set to be larger than a throat width between the blade tip portions adjacent to each other in the peripheral direction.

Such turbine nozzle can be incorporated in an existing turbocharger.

A fifth aspect of the present invention can be a ship provided with in a hull: an internal combustion engine; and the turbocharger as described above.

### {Advantageous Effects of Invention}

According to the turbocharger pertaining to the present invention, an effect is exerted that can improve engine performance in a state of having switched to an inflow area of the exhaust gas most suitable at the time of low load of an engine by improving turbine efficiency when the inflow area of the exhaust gas is decreased.

### {Brief Description of Drawings}

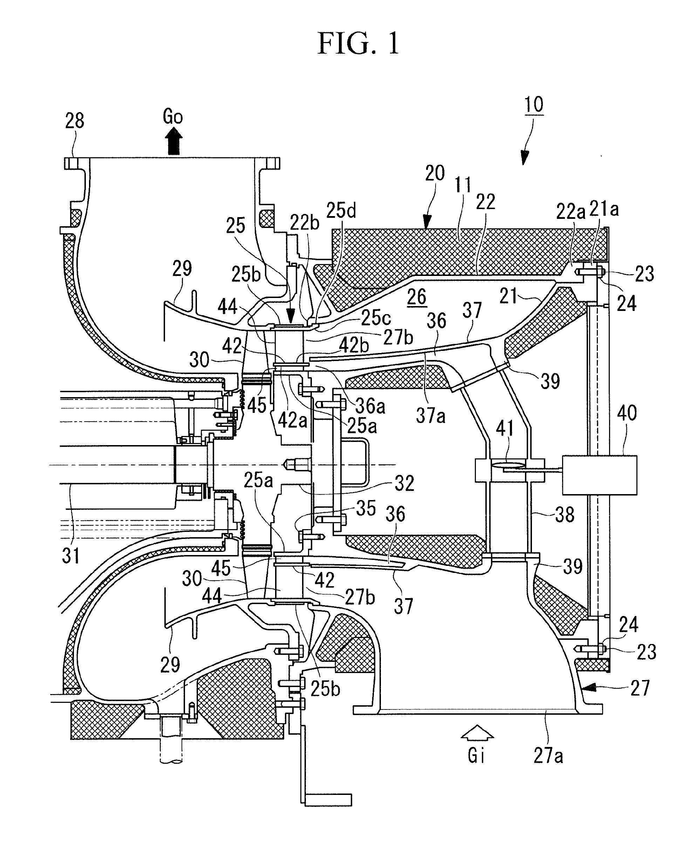

{Fig. 1}
   Fig. 1 is a cross-sectional view showing a turbine side of a turbocharger pertaining to one embodiment of the present invention.
{Fig. 2}
   Fig. 2 is a view of a turbine nozzle provided at the turbocharger of Fig. 1 seen from a direction perpendicular to a central axis.
{Fig. 3A}
   Fig. 3A is an arrow cross-sectional view taken along a line D-D of Fig. 2.
{Fig. 3B}
   Fig. 3B is an arrow cross-sectional view taken along a line E-E of Fig. 2.
{Fig. 4}
   Fig. 4 is an arrow cross-sectional view taken along a line F-F of Fig. 2.
{Fig. 5}
   Fig. 5 is a chart for explaining a relation between a radial position and a throat width in the turbine nozzle.

### {Description of Embodiments}

Hereinafter, one embodiment of an exhaust turbine supercharger pertaining to the present invention will be explained with reference to Figs. 1 to 5.

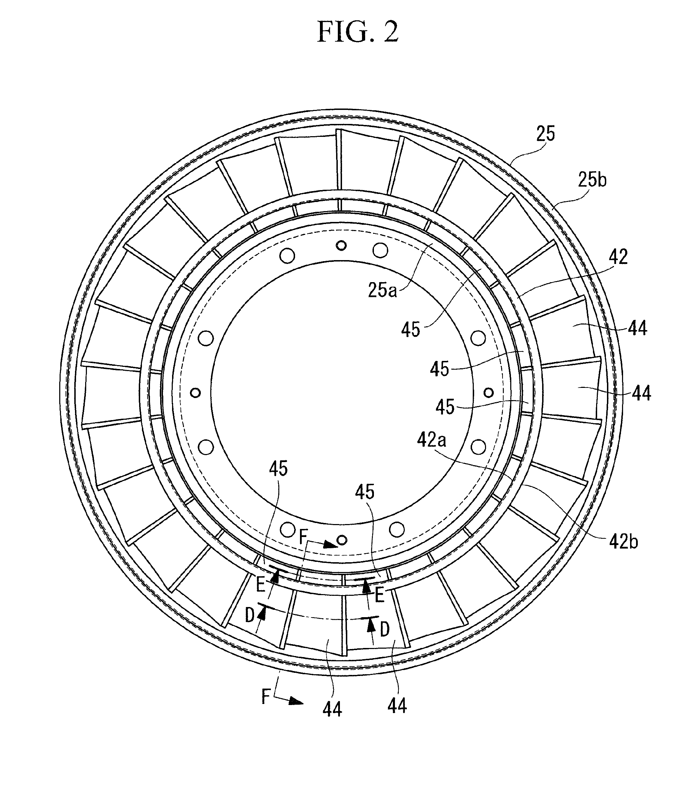

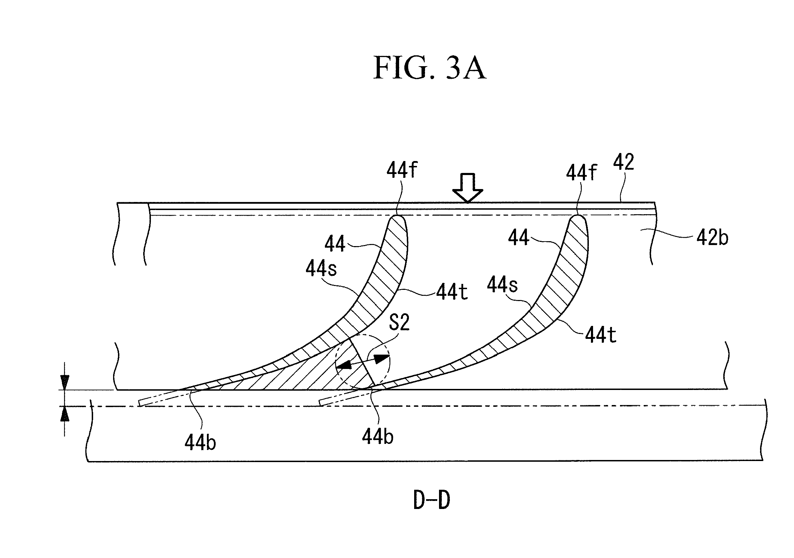

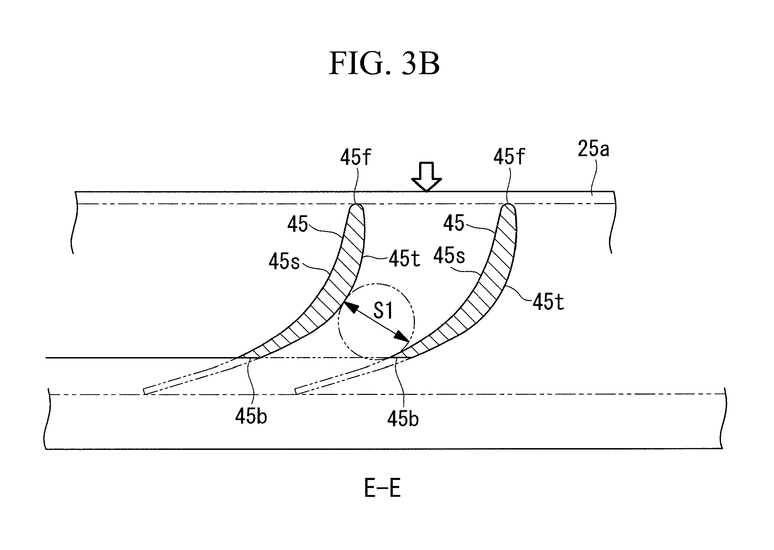

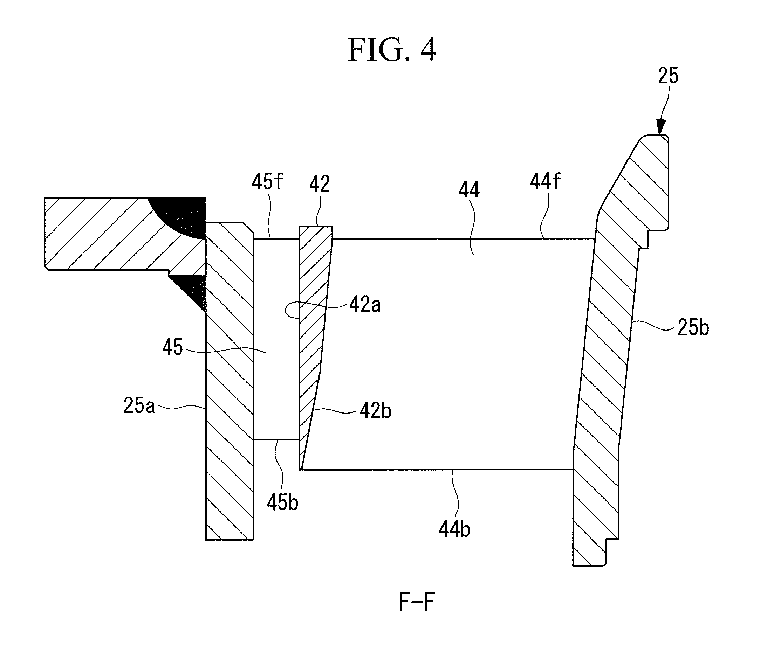

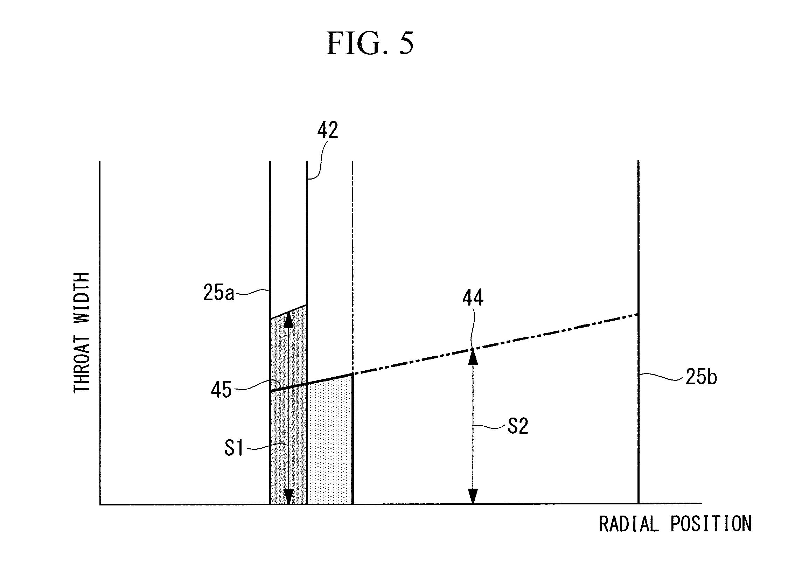

Fig. 1 is a cross-sectional view showing a turbine side of a turbocharger pertaining to the embodiment, and Fig. 2 is a view of a turbine nozzle provided at the turbocharger of Fig. 1 seen from a direction perpendicular to a central axis. Fig. 3A is an arrow cross-sectional view taken along a line D-D of Fig. 2, and Fig. 3B is an arrow cross-sectional view taken along a line E-E of Fig. 2. Fig. 4 is an arrow cross-sectional view taken along a line F-F of Fig. 2. Fig. 5 is a chart for explaining a relation between a radial position and a throat width in the turbine nozzle.

As shown in Fig. 1, a turbocharger (also referred to as an "exhaust turbine supercharger") 10 compresses combustion air of an internal combustion engine (not shown), and forcibly sends the densified air into a combustion chamber (not shown) of the internal combustion engine. The turbocharger 10 is provided with a turbine 20 and a compressor (not shown). The turbine 20 is provided with turbine rotor blades 30 that are rotationally driven by exhaust gas discharged from the internal combustion engine, and a turbine nozzle 25 that guides the exhaust gas to the turbine rotor blades 30.

Such turbocharger is mounted in a hull (not shown) together with the internal combustion engine, and configures a ship.

The turbocharger 10 is, for example, an axial-flow type turbine configured so as to rotate the compressor (not shown) arranged at an other end of a rotor shaft 31 by a shaft output obtained by expansion of the exhaust gas of the internal combustion engine introduced into the turbine 20, and so as to supply the compressed air compressed to have a high density to the internal combustion engine.

Note that portions shown by lattice-shaped hatching in Fig. 1 are heat insulation materials 11 installed for the purpose of heat insulation and soundproofing.

The turbine 20 is provided with a gas inlet casing 27 configured so that a space formed between an inner casing 21 and an outer casing 22 serves as an exhaust gas passage (a first exhaust gas passage) 26 for guiding exhaust gas to the turbine nozzle 25 regardless of an output of the internal combustion engine.

In such gas inlet casing 27 having a double structure, the exhaust gas passage 26 is formed over an entire periphery in a rotational direction of the turbine 20. Exhaust gas introduced from a gas inlet 27a of the gas inlet casing 27 as shown by an arrow Gi in Fig. 1 is guided to a gas outlet 27b of the gas inlet casing 27 through the exhaust gas passage 26, and is subsequently discharged to an outside from an outlet of a gas outlet casing 28 as shown by an arrow Go in Fig. 1. In addition, the gas outlet 27b is provided to be opened so as to supply the exhaust gas to the turbine nozzle 25 over the entire periphery in the rotational direction.

In addition, the turbine 20 is provided with a rotor disk 32 provided at one end of the rotor shaft 31, and a number of turbine rotor blades 30 attached to a peripheral portion of the rotor disk 32 along a peripheral direction. The turbine rotor blades 30 are provided close to a downstream side serving as an outlet of the turbine nozzle 25. Additionally, high-temperature exhaust gas blown out from the turbine nozzle 25 passes through the turbine rotor blades 30 and expands, and thereby the rotor disk 32 and the rotor shaft 31 rotate.

In the gas inlet casing 27, one end of the inner casing 21 is fixed to and supported by one end of the outer casing 22 by means of a fastening means (for example, a stud bolt 23 and a nut 24). Namely, a flange surface 21a formed at a casing end of a right side of a paper, which is an opposite side of the rotor disk 32, and a flange surface 22a of the outer casing 22 formed so as to be opposed to the flange surface 21a are made into an overlapping state, and the fastening means (for example, the nut 24) is fastened in the state, whereby the inner casing 21 is fixed and supported. These flange surfaces 21a, 22a are both formed as the surfaces perpendicular to an axial direction of the rotor shaft 31 that rotates integrally with the rotor disk 32.

At an inner peripheral side (an inside in a radial direction) of the inner casing 21, an exhaust gas passage 36 (a second exhaust gas passage) that guides exhaust gas branched in the middle of the exhaust gas passage 26 to an inner peripheral side (the inside in the radial direction) of the turbine nozzle 25 only when the output of the internal combustion engine is not less than a particular output is formed over the entire periphery in the rotational direction of the turbine 20. The exhaust gas passage 36 is provided at an inner peripheral side (the inside in the radial direction) of the exhaust gas passage 26, and the exhaust gas passages 26 and 36 are partitioned by a partition wall 37 provided at the inner casing 21.

In addition, a flange 39 for connecting a pipe 38 is provided at an inner peripheral portion of one end (an inner peripheral side of the one end) of the inner casing 21. An opening and closing valve (for example, a butterfly valve) 41 that is automatically opened and closed by a control device 40 is connected in the middle of the pipe 38. Additionally, the exhaust gas branched in the middle of the exhaust gas passage 26 is guided to the exhaust gas passage 36 of the inner peripheral side through the flange 39 and the pipe 38.

As shown in Fig. 2, a ring-shaped member that is generally called a nozzle ring and forms the turbine nozzle 25 has a double ring structure provided with: a cylindrical inner peripheral side member 25a; an outer peripheral side member 25b that is formed in a cylindrical shape having a larger inner diameter than the inner peripheral side member 25a and is concentrically arranged at an outer peripheral side of the inner peripheral side member 25a; and a cylindrical partition member 42 concentrically provided between the inner peripheral side member 25a and the outer peripheral side member 25b. The partition member 42 separates the exhaust gas guided from the exhaust gas passage 26 and the exhaust gas guided from the exhaust gas passage 36.

As shown in Fig. 1, the inner peripheral side member 25a of the turbine nozzle 25 is connected (attached) to an inner peripheral portion of the other end (an end of the rotor disk 32 side) (an inner peripheral side of the other end) of the inner casing 21 through a bolt 35.

Meanwhile, in the outer peripheral side member 25b of the turbine nozzle 25, a diameter of an inner peripheral surface 25c of an end of a gas inlet side (gas outlet 27b side) is expanded in a trumpet shape. In addition, a step portion 22b formed so that an inner peripheral surface of the outer casing 22 is bent in a direction of the rotor disk 32 is provided at an end of the rotor disk 32 side of the outer casing 22. Additionally, the step portion 22b and a step portion 25d provided at an end of a gas inlet side of the nozzle ring are configured to engage with (fit in) each other in the axial direction.

Furthermore, in the outer peripheral side member 25b of the nozzle ring, a gas guide cylinder 29 is coupled to an end serving as a gas outlet side (a turbine rotor blade 30 side). A coupling portion of the outer peripheral side member 25b of the nozzle ring and the gas guide cylinder 29 are formed as a mating structure in which mutual ends have been fitted in each other.

In a root side (an inner peripheral side member 25a side of the nozzle ring) of the turbine nozzle 25, an inner peripheral surface 42a of the partition member 42 forms a surface continuous to an inner peripheral surface (a surface of the inside in the radial direction) 37a of the partition wall 37, and is substantially parallel to the rotor shaft 31 and the inner peripheral side member 25a of the nozzle ring.

In addition, an outer peripheral surface (outer peripheral side) 42b of the partition member 42 is preferably formed in a tapered shape that inclines to the inner peripheral side of the turbine nozzle 25 from an upstream side toward a downstream side (from right to left sides in Fig. 1) of the exhaust gas guided from the exhaust gas passage 26 to the turbine nozzle 25 of the outer peripheral side.

A tapered angle of the outer peripheral surface 42b of the partition member 42 is, for example, set approximately 20 degrees, the outer peripheral surface 42b being formed in the tapered shape from the upstream side toward the downstream side of the exhaust gas guided to the turbine nozzle 25 of the outer peripheral side.

In addition, the partition member 42 is provided at a position where a ratio of a throat area formed between the outer peripheral side member 25b and the partition member 42, and a throat area formed between the inner peripheral side member 25a and the partition member 42 is, for example, 9:1 (90%:100).

As shown in Fig. 2, in the turbine nozzle 25, a plurality of blade tip portions (first exhaust gas passage side blade portions) 44 provided spaced apart from each other in the peripheral direction is provided between the outer peripheral side member 25b and the partition member 42, and a plurality of blade root portions (second exhaust gas passage side blade portions) 45 provided spaced apart from each other in the peripheral direction is provided between the inner peripheral side member 25a and the partition member 42. The exhaust gas guided from the exhaust gas passage 26 passes through the blade tip portions 44, and the exhaust gas guided from the exhaust gas passage 36 passes through the blade root portions 45.

As shown in Figs. 3A and 3B, in the blade tip portion 44 and the blade root portion 45, blade surfaces 44s and 45s that face the upstream side in a flow direction of the exhaust gas form curved surfaces which are concave on the downstream side in the flow direction. In addition, in the blade tip portion 44 and the blade root portion 45, blade surfaces 44t and 45t that face the downstream side in the flow direction of the exhaust gas form curved surfaces which are convex on the downstream side in the flow direction. Additionally, at the inner peripheral side and the outer peripheral side that have sandwiched the partition member 42, the blade tip portion 44 and the blade root portion 45 are formed so that shapes of the blade surfaces 44s, 44t and shapes of the blade surfaces 45s, 45t of the blade root portion 45 continue sandwiching the partition member 42.

Consequently, as shown in Figs. 3A, 3B, and 4, a leading edge 44f of the upstream side in the flow direction of the exhaust gas of the blade tip portion 44 and a leading edge 45f of the blade root portion 45 are formed at a same position in the flow direction of the exhaust gas.

Meanwhile, a trailing edge 45b of the downstream side in the flow direction of the exhaust gas of the blade root portion 45 is formed so as to be located closer to the upstream side in the flow direction of the exhaust gas than a trailing edge 44b of the blade tip portion 44.

In that case, as shown in Figs. 3A and 3B, a value of a narrowest width of a passage between the blade root portions 45, 45 adjacent to each other in the peripheral direction of the turbine nozzle 25, i.e., a throat width S1, is set to be larger than a throat width S2 between the blade tip portions 44, 44 adjacent to each other in the peripheral direction.

In order to form such blade root portion 45, for example, the blade tip portion 44 and the blade root portion 45 are made to have a same cross-sectional shape at first, and are continuously formed in the radial direction at the inner peripheral side and the outer peripheral side that have sandwiched the partition member 42, and subsequently, the trailing edge of the blade root portion 45 is cut. In that case, the trailing edge 45b of the blade root portion 45 is located closer to the upstream side in the flow direction of the exhaust gas than the trailing edge 44b of the blade tip portion 44. As a result, the throat width S1 between the blade root portions 45, 45 becomes larger than the throat width S2 between the blade tip portions 44, 44.

Of course, as described above, the trailing edge 45b of the blade root portion 45 may be previously formed to have a predetermined dimension instead of being cut later. A manufacturing method of the turbine nozzle 25 is not limited at all.

Next, a flow of exhaust gas in the turbocharger 10 configured as described above will be explained.

For example, when a load of the internal combustion engine is low, and there is little amount of exhaust gas, the opening and closing valve 41 is set to be a fully closed state, and when the load of the internal combustion engine is high, and there is much amount of exhaust gas, the opening and closing valve 41 is set to be a fully opened state.

Namely, when the load of the internal combustion engine is low, and there is little amount of exhaust gas, a whole amount of the exhaust gas introduced from the gas inlet 27a of the gas inlet casing 27 is guided to the gas outlet 27b of the outer peripheral side through the exhaust gas passage 26. The exhaust gas guided to the gas outlet 27b of the outer peripheral side is guided from the gas outlet 27b to the outer peripheral side of the turbine nozzle 25 (in a space partitioned by the outer peripheral side member 25b and the partition member 42).

Since the outer peripheral surface 42b of the partition member 42 provided at the turbine nozzle 25 is formed in the tapered shape, the exhaust gas guided to the outer peripheral side of the turbine nozzle 25 flows toward the inner peripheral side of the turbine nozzle 25 along the tapered shape of the outer peripheral surface 42b of the partition member 42. Therefore, the exhaust gas derived from the downstream side of the turbine nozzle 25 is guided over the whole turbine rotor blades 30. The exhaust gas guided to the whole turbine rotor blades 30 as described above expands in passing through the turbine rotor blades 30, and rotates the rotor disk 32 and the rotor shaft 31.

Meanwhile, when the load of the internal combustion engine is high, and there is much amount of exhaust gas, most (for example, approximately 70 to 95%) of the exhaust gas introduced from the gas inlet 27a of the gas inlet casing 27 is guided to the gas outlet 27b of the outer peripheral side through the exhaust gas passage 26, and a part (approximately 5 to 30%) of the exhaust gas introduced from the gas inlet 27a of the gas inlet casing 27 is guided to a gas outlet 36a of the inner peripheral side through the flange 39, the pipe 38, the opening and closing valve 41, and the exhaust gas passage 36.

The exhaust gas guided to the gas outlet 27b of the outer peripheral side is guided from the gas outlet 27b that is opened over the entire periphery in the rotational direction to the outer peripheral side of the turbine nozzle 25 (in the space partitioned by the outer peripheral side member 25b and the partition member 42).

The exhaust gas guided to the outer peripheral side of the turbine nozzle 25 flows along the outer peripheral surface 42b of the partition member 42 having the tapered shape. Therefore, the exhaust gas derived from the downstream side of the turbine nozzle 25 is guided over the whole turbine rotor blades 30. The exhaust gas guided to the whole turbine rotor blades 30 as described above expands in passing through the turbine rotor blades 30, and rotates the rotor disk 32 and the rotor shaft 31.

Meanwhile, the exhaust gas guided to the gas outlet 36a of the inner peripheral side is guided from the gas outlet 36a that is opened over the entire periphery in the rotational direction to the inner peripheral side of the turbine nozzle 25 (in a space partitioned by the inner peripheral side member 25a and the partition member 42). At this time, since the throat width S1 between the blade root portions 45, 45 adjacent to each other is set to be larger than the throat width S2 between the blade tip portions 44, 44, a flow rate of the exhaust gas that flows between the inner peripheral side member 25a and the partition member 42 increases more as compared with a case where the throat width S1 is set to be not more than the throat width S2.

The exhaust gas guided to the inner peripheral side of the turbine nozzle 25 flows along the inner peripheral surface 42a of the partition member 42 provided at the turbine nozzle 25. Therefore, the exhaust gas derived from the downstream side of the turbine nozzle 25 is guided to the inner peripheral side of the turbine rotor blades 30. The exhaust gas guided to the inner peripheral side of the turbine rotor blades 30 as described above expands in passing through the turbine rotor blades 30, and rotates the rotor disk 32 and the rotor shaft 31.

As described above, the exhaust gas expands in passing through the turbine rotor blades 30 and rotates the rotor disk 32 and the rotor shaft 31, and thereby the compressor provided at the other end of the rotor shaft 31 is driven, and the air supplied to the internal combustion engine is compressed.

Note that the air compressed by the compressor is suctioned through a filter (not shown), and that the exhaust gas expanded by the turbine rotor blades 30 is guided to the gas guide cylinder 29 and the gas outlet casing 28, and flows out to an outside.

In addition, for example, when a pressure of the air sent out (discharged) from the compressor or a pressure of the air supplied to the combustion chamber of the internal combustion engine is lower than an absolute pressure, for example, 0.2 MPa (2 bar), i.e., when low load operation of the internal combustion engine is performed, the opening and closing valve 41 is set to be the fully closed state. Meanwhile, when the pressure of the air sent out (discharged) from the compressor or the pressure of the air supplied to the combustion chamber of the internal combustion engine is not less than the absolute pressure, for example, 0.2 MPa (2 bar), i.e., when high load operation of the internal combustion engine is performed, the opening and closing valve 41 is set to be the fully opened state.

As mentioned above, in the embodiment, the throat width S1 between the blade root portions 45, 45 adjacent to each other is set to be larger than the throat width S2 between the blade tip portions 44, 44.

When the blade tip portion 44 and the blade root portion 45 are made to have the same cross-sectional shape, and are continuously formed in the radial direction at the inner peripheral side and the outer peripheral side that have sandwiched the partition member 42, intervals between the blade tip portions 44, 44 adjacent to each other in the peripheral direction of the turbine nozzle 25 and between the blade root portions 45, 45 adjacent to each other therein become smaller toward the inside in the radial direction of the turbine nozzle 25. In that case, as shown by a chain double-dashed line in Fig. 5, the throat widths of the exhaust gas passages formed between the blade tip portions 44, 44 adjacent to each other and between the blade root portions 45, 45 adjacent to each other also become smaller toward the inside in the radial direction.

In contrast with this, the throat width S1 between the blade root portions 45, 45 adjacent to each other is set to be larger than the throat width S2 between the blade tip portions 44, 44 as described above, and thereby the flow rate of the exhaust gas that flows between the inner peripheral side member 25a and the partition member 42 increases. In that case, as compared with the case where the blade tip portion 44 and the blade root portion 45 are made to have the same cross-sectional shape, and are continuously formed at the inner peripheral side and the outer peripheral side that have sandwiched the partition member 42, it can be suppressed that the flow rate of the exhaust gas that flows between the inner peripheral side member 25a and the partition member 42 decreases, even though the partition member 42 is moved to and installed at the inside in the radial direction. Accordingly, it becomes possible to change clearly in two stages an inflow area of the exhaust gas that flows into the turbine nozzle 25 according to an engine load while improving turbine efficiency.

In addition, the outer peripheral surface (outer peripheral side) 42b of the partition member 42 is set so as to incline to the inner peripheral side of the turbine nozzle 25 from the upstream side toward the downstream side of the exhaust gas guided to the turbine nozzle 25. Therefore, the exhaust gas that flows through the turbine nozzle 25 closer to the outside in the radial direction than the partition member 42 is guided to the inner peripheral side of the turbine nozzle 25 along the outer peripheral surface 42b of the partition member 42. Consequently, the exhaust gas derived from the turbine nozzle 25 can be guided to the whole turbine rotor blades 30. Accordingly, turbine efficiency can be improved as compared with a case where the outer peripheral surface 42b of the partition member 42 is not inclined. Additionally, the turbine efficiency when the inflow area of the exhaust gas is decreased is improved, and thereby engine performance in a state of having switched to an inflow area of the exhaust gas most suitable at the time of low load of the engine can be improved.

Note that the present invention is not limited to the above-mentioned embodiment, and that modification and change can be appropriately made as needed without departing from the technical idea of the present invention.

For example, although in the above-mentioned embodiment, the tapered angle of the outer peripheral surface 42b of the partition member 42 has been explained as approximately 20 degrees, the present invention is not limited to this, and the tapered angle may be arbitrary as long as it is the angle where the exhaust gas guided from the downstream side of the turbine nozzle 25 to the turbine rotor blades 30 is guided to the whole turbine rotor blades 30.

Furthermore, although in the above-mentioned embodiment, the outer peripheral surface 42b of the partition member 42 has been explained as the tapered shape that gradually downwardly inclines from the upstream side toward the downstream side of the turbine nozzle 25, the outer peripheral surface 42b may just have a shape along which the exhaust gas that has passed through the turbine nozzle 25 is guided to a root side of the turbine rotor blades 30, even if the shape is the one that guides the flow of the exhaust gas to the inner peripheral side of the turbine nozzle 25 toward the downstream side when the opening and closing valve 41 is closed, for example, a conical surface shape or a curved surface shape.

Still furthermore, although the present invention has been explained using the axial-flow turbine in the above-mentioned embodiment, it can be applied also to rotary machines, such as a centrifugal type/diagonal-flow type turbine and a power turbine.

In addition, in the turbocharger 10 as described above, if the trailing edge 45b of the blade root portion 45 is formed so as to be located closer to the upstream side in the flow direction of the exhaust gas than the trailing edge 44b of the blade tip portion 44, the throat width S1 between the blade root portions 45, 45 may not be set to be larger than the throat width S2 between the blade tip portions 44, 44. This is because if the trailing edge 45b of the blade root portion 45 is located closer to the upstream side in the flow direction of the exhaust gas than the trailing edge 44b of the blade tip portion 44, even if the throat width S1 between the blade root portions 45, 45 is smaller than the throat width S2 between the blade tip portions 44, 44, a sufficient operational effect can be obtained as compared with the case where the blade tip portion 44 and the blade root portion 45 are made to have the same cross-sectional shape, and are continuously formed in the radial direction at the inner peripheral side and the outer peripheral side that have sandwiched the partition member 42.

In addition, the present invention may be configured such that the number of blade root portions 45 is formed less than the number of blade tip portions 44 along the peripheral direction.

Also by the above, the throat width S1 between the blade root portions 45, 45 becomes larger than the throat width S2 between the blade tip portions 44, 44, and an operational effect similar to the above-described embodiment can be obtained.

Still furthermore, a configuration of the entire turbocharger 10 is not limited to the configuration shown above. For example, the turbine nozzle 25 as described above can be incorporated in an existing turbocharger. As a result of it, the operational effect similar to the above-described embodiment can be obtained also in the existing turbocharger by only incorporating the turbine nozzle 25.

### {Reference Signs List}

- 10: Turbocharger
- 20: Turbine
- 21: Inner casing
- 22: Outer casing
- 25: Turbine nozzle
- 25a: Inner peripheral side member
- 25b: Outer peripheral side member
- 26: Exhaust gas passage (first exhaust gas passage)
- 27: Gas inlet casing
- 27a: Gas inlet
- 27b: Gas outlet
- 28: Gas outlet casing
- 30: Turbine rotor blade
- 36: Exhaust gas passage (second exhaust gas passage)
- 36a: Gas outlet
- 37: Partition wall
- 42: Partition member
- 44: Blade tip portion (first exhaust gas passage side blade portion)
- 44b: Trailing edge
- 44f: Leading edge
- 44s, 44t: Blade surface
- 45: Blade root portion (second exhaust gas passage side blade portion)
- 45b: Trailing edge
- 45f: Leading edge
- 45s,: 45t Blade surface

## Claims

1. A turbocharger that compresses combustion air of an internal combustion engine, and sends it into a combustion chamber of the internal combustion engine, wherein
a turbine provided at the turbocharger includes:
a turbine rotor blade rotationally driven by exhaust gas discharged from the internal combustion engine;
a plurality of turbine nozzles that guide the exhaust gas to the turbine rotor blade;
a first exhaust gas passage that guides exhaust gas to the turbine nozzles regardless of an output of the internal combustion engine; and
a second exhaust gas passage that guides exhaust gas to the turbine nozzles only when the output of the internal combustion engine is not less than a particular output, and wherein
the turbine nozzles each include:
a partition member that separates the exhaust gas guided from the first exhaust gas passage and the exhaust gas guided from the second exhaust gas passage;
a first exhaust gas passage side blade portion through which the exhaust gas guided from the first exhaust gas passage passes; and
a second exhaust gas passage side blade portion through which the exhaust gas guided from the second exhaust gas passage passes, and wherein
a throat width between the second exhaust gas passage side blade portions adjacent to each other in a peripheral direction is set to be larger than a throat width between the first exhaust gas passage side blade portions adjacent to each other in the peripheral direction.

2. A turbocharger that compresses combustion air of an internal combustion engine, and sends it into a combustion chamber of the internal combustion engine, wherein
a turbine provided at the turbocharger includes:
a turbine rotor blade rotationally driven by exhaust gas discharged from the internal combustion engine; and
a turbine nozzle that guides the exhaust gas to the turbine rotor blade, and wherein
the turbine nozzle includes:
a cylindrical inner peripheral side member;
an outer peripheral side member that has an inner diameter larger than the inner peripheral side member, and is arranged concentrically at an outer peripheral side of the inner peripheral side member;
a partition member provided between the inner peripheral side member and the outer peripheral side member;
a plurality of blade tip portions provided spaced apart from each other in a peripheral direction, the portions being provided between the outer peripheral side member and the partition member; and
a plurality of blade root portions provided spaced apart from each other in the peripheral direction, the portions being provided between the inner peripheral side member and the partition member, and wherein
a throat width between the blade root portions adjacent to each other in the peripheral direction is set to be larger than a throat width between the blade tip portions adjacent to each other in the peripheral direction.

3. The turbocharger according to claim 2, wherein
a blade profile of the blade tip portion and a blade profile of the blade root portion are continuously formed at an inner peripheral side and an outer peripheral side that have sandwiched the partition member, and wherein
a trailing edge of the blade root portion is formed so as to be located closer to an upstream side in a flow direction of the exhaust gas than a trailing edge of the blade tip portion.

4. A turbocharger that compresses combustion air of an internal combustion engine, and sends it into a combustion chamber of the internal combustion engine, wherein
a turbine provided at the turbocharger includes:
a turbine rotor blade rotationally driven by exhaust gas discharged from the internal combustion engine; and
a turbine nozzle that guides the exhaust gas to the turbine rotor blade, and wherein
the turbine nozzle includes:
a cylindrical inner peripheral side member;
an outer peripheral side member that has an inner diameter larger than the inner peripheral side member, and is arranged concentrically at an outer peripheral side of the inner peripheral side member;
a partition member provided between the inner peripheral side member and the outer peripheral side member;
a plurality of blade tip portions provided spaced apart from each other in a peripheral direction, the portions being provided between the outer peripheral side member and the partition member; and
a plurality of blade root portions provided spaced apart from each other in the peripheral direction, the portions being provided between the inner peripheral side member and the partition member, and wherein
a blade profile of the blade tip portion and a blade profile of the blade root portion are continuously formed at an inner peripheral side and an outer peripheral side that have sandwiched the partition member, and wherein
a trailing edge of the blade root portion is formed so as to be located closer to an upstream side in a flow direction of the exhaust gas than a trailing edge of the blade tip portion.

5. The turbocharger according to any one of claims 1 to 4, wherein the number of the blade root portions is formed less than the number of the blade tip portions along the peripheral direction.

6. A turbine nozzle that is arranged at an upstream side of a turbine rotor blade of a turbocharger that compresses combustion air of an internal combustion engine and sends it into a combustion chamber of the internal combustion engine, and guides exhaust gas to the turbine rotor blade, the turbine nozzle comprising:
a cylindrical inner peripheral side member;
an outer peripheral side member that has an inner diameter larger than the inner peripheral side member, and is arranged concentrically at an outer peripheral side of the inner peripheral side member;
a partition member provided between the inner peripheral side member and the outer peripheral side member;
a plurality of blade tip portions provided spaced apart from each other in a peripheral direction, the portions being provided between the outer peripheral side member and the partition member; and
a plurality of blade root portions provided spaced apart from each other in the peripheral direction, the portions being provided between the inner peripheral side member and the partition member, wherein
a throat width between the blade root portions adjacent to each other in the peripheral direction is set to be larger than a throat width between the blade tip portions adjacent to each other in the peripheral direction.

7. A ship comprising in a hull: an internal combustion engine; and the turbocharger according to any one of claims 1 to 5.
